# EUROPEAN PATENT APPLICATION

(11) **EP 4 653 114 A1**
(43) Date of publication of application: **26.11.2025**
(21) Application number: 25176811.5
(22) Date of filing: 15.05.2025
(51) Int. Cl.: B23K 9/095, B23K 9/12, B23K 9/173, B23K 9/28, B23K 9/32, B23K 9/29

(54) **TRACKING ATTACHMENTS FOR STICK WELDING TECHNIQUE MONITORING SYSTEMS**

(30) Priority: 20.05.2024 US 202463649629 P; 08.05.2025 US 202519202543
(71) Applicant: Illinois Tool Works Inc., Glenview IL 60025 (US)
(72) Inventor: BECKER, William Joshua, Glenview, 60025 (US); KOPAC III, Jordan J., Glenview, 60025 (US); BEATHAM, Benjamin, Glenview, 60025 (US)
(74) Representative: HGF

(57) **Abstract**

Some examples of the present disclosure relate to tracking attachments (400) that allow trackable markers (499) to be easily attached to stick electrodes (200) and/or stick electrode holders (100), thereby removing the need for costly customized/modified stick electrode holders (100) and/or stick electrodes (200). In some examples, each tracking attachment (400) includes one or more trackable markers (499) that can be detected and/or tracked by a monitoring system (602). In some examples, the trackable marker(s) (499) of the tracking attachment (400) facilitate tracking and/or monitoring of welding technique by aiding in the tracking/monitoring of the position(s) and/or orientation(s) of the stick electrode (200) and/or stick electrode holder (100) during welding-type operations.

## Description

### CROSS REFERENCE TO RELATED APPLICATIONS

This application claims priority to, and the benefit of, U.S. Provisional Application No. 63/649,629, filed May 20, 2024, entitled "Tracking Attachments for Stick and TIG Portable Welding Technique Monitoring Systems," the entire contents of which are hereby incorporated by reference.

### TECHNICAL FIELD

The present disclosure generally relates to welding technique monitoring systems, and, more particularly, to tracking attachments for stick welding technique monitoring systems.

### BACKGROUND

Welding technique generally refers to the way in which a welding operator positions, moves, and/or manipulates a welding torch during a welding operation. Good welding technique can positively impact the quality of a weld. Bad welding technique can negatively impact the quality of a weld. However, it can sometimes be difficult for (e.g., less experienced) human operators to accurately judge whether welding technique is good or bad.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to tracking attachments for stick welding technique monitoring systems, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIGS. 1a-1c show examples of a stick electrode holder, in accordance with aspects of this disclosure.
FIG. 2 shows an example of the stick electrode holder of FIGS. 1a-1c holding a stick electrode in an electrode slot of the stick electrode holder, in accordance with aspects of this disclosure.
FIG. 3 shows an example formation of electrode slots of the stick electrode holder of FIGS. 1a-1c, in accordance with aspects of this disclosure.
FIGS. 4a-4g show examples of a tracking attachment configured for attachment to the stick electrode holder of FIGS. 1a-1c, in accordance with aspects of this disclosure.
FIGS. 5a-5f show examples of the tracking attachment of FIGS. 4a-4g attached to the stick electrode holder of FIGS. 1a-1c and stick electrode of FIG. 2, in accordance with aspects of this disclosure.
FIG. 6 shows an example of a welding-type system in which a monitoring system may be used to track the stick electrode of FIG. 2 (when the stick electrode is held by the stick electrode holder of FIGS. 1a-1c) by tracking the tracking attachment of FIGS. 1a-1c (when the tracking attachment is attached to the stick electrode holder of FIGS. 1a-1c), in accordance with aspects of this disclosure.

The figures are not necessarily to scale. Where appropriate, the same or similar reference numerals are used in the figures to refer to similar or identical elements.

### DETAILED DESCRIPTION

Some examples of the present disclosure relate to tracking attachments that allow trackable markers to be attached to stick electrodes and/or stick electrode holders (aka "stingers"), thereby removing the need for costly customized/modified stick electrode holders and/or stick electrodes. In some examples, each tracking attachment includes one or more trackable markers that can be detected and/or tracked by a monitoring system. In some examples, the trackable marker(s) of the tracking attachment facilitate tracking and/or monitoring of the position(s) and/or orientation(s) of the stick electrode holder and/or stick electrode during welding-type operations (e.g., Shielded Metal Arc Welding (SMAW) operations).

Some examples of the present disclosure relate to a tracking attachment for an electrode holder used to hold a stick electrode, the tracking attachment comprising: an electrode cover comprising a trackable marker that can be detected by a tracking system, and a cover connector coupled to the electrode cover, the cover connector configured for connection with the electrode holder.

In some examples, the cover connector is configured for connection to an electrode holding head of the electrode holder. In some examples, the cover connector is configured for connection to the electrode holding head via a fastener, the fastener also connecting a first portion of the electrode holding head to a second portion of the electrode holding head. In some examples, the first portion is an insulating portion, and the second portion is an electrically conductive portion.

In some examples, the cover connector comprises a first cover connector, the tracking attachment further comprising a second cover connector coupled to the electrode cover, the first cover connector being configured for connection with a first side of the electrode holding head, and the second cover connector being configured for connection with a second side of the electrode holding head that is opposite the first side of the electrode holding head. In some examples, the first and second sides of the electrode holding head are connected at a joint such that the first and second sides can be pivoted away from one another about the joint to open and receive the stick electrode, or can be rotated towards one another about the joint to close around and hold the stick electrode. In some examples, the electrode holding head is configured to hold the stick electrode at a plurality of different stick electrode orientations relative to the electrode holding head, and the cover connector is configured for a rotatable connection with the electrode holding head, such that the electrode cover can be moved about the rotatable connection to a position collinear with the stick electrode regardless of at which stick electrode orientation the stick electrode is held.

In some examples, the electrode holding head is configured to hold the stick electrode at a plurality of different stick electrode positions relative to the electrode holding head, and the cover connector is coupled to the electrode cover via a flexible coupling member that can be bent or stretched to allow for translation of the electrode cover between different electrode cover positions that are collinear with the stick electrode when the stick electrode is held at the different stick electrode positions. In some examples, the electrode cover further includes an electrode channel sized to fit the stick electrode. In some examples, the electrode channel extends through an approximate center of the electrode cover, such that the approximate center of the trackable marker will be collinear with the stick electrode when the stick electrode extends through the electrode channel.

Some examples of the present disclosure relate to a welding system, comprising: a tracking attachment for an electrode holder used to hold a stick electrode, the tracking attachment comprising: an electrode cover comprising a trackable marker that can be detected by a tracking system, and a cover connector coupled to the electrode cover, the cover connector configured for connection with the electrode holder.

In some examples, the cover connector is configured for connection to an electrode holding head of the electrode holder. In some examples, the cover connector is configured for connection to the electrode holding head via a fastener, the fastener also connecting a first portion of the electrode holding head to a second portion of the electrode holding head, wherein the first portion is an insulating portion, and the second portion is an electrically conductive portion. In some examples, the cover connector comprises a first cover connector, the tracking attachment further comprising a second cover connector coupled to the electrode cover, the first cover connector being configured for connection with a first side of the electrode holding head, and the second cover connector being configured for connection with a second side of the electrode holding head that is opposite the first side of the electrode holding head, the first and second sides of the electrode holding head being connected at a joint such that the first and second sides can be pivoted away from one another about the joint to open and receive the stick electrode, or can be rotated towards one another about the joint to close around and hold the stick electrode.

In some examples, the electrode holding head is configured to hold the stick electrode at a plurality of different stick electrode orientations relative to the electrode holding head, and the cover connector is configured for a rotatable connection with the electrode holding head, such that the electrode cover can be moved about the rotatable connection to a position collinear with the stick electrode regardless of at which stick electrode orientation the stick electrode is held. In some examples, the electrode holding head is configured to hold the stick electrode at a plurality of different stick electrode positions relative to the electrode holding head, and the cover connector is coupled to the electrode cover via a flexible coupling member that can be bent and/or stretched to allow for translation of the electrode cover between different electrode cover positions that are collinear with the stick electrode when the stick electrode is held at the different stick electrode positions. In some examples, the electrode cover further includes an electrode channel sized to fit the stick electrode.

In some examples, the electrode channel extends through an approximate center of the electrode cover, such that the approximate center of the trackable marker will be collinear with the stick electrode when the stick electrode extends through the electrode channel. In some examples, the welding system further comprises the stick electrode holder, the stick electrode holder comprising: an electrode holding head configured to hold the stick electrode at a plurality of different orientations, the electrode holding head comprising an electrically insulating portion and an electrically conductive portion, the electrically conductive portion being configured to contact the stick electrode, a handle connected to the electrode holding head at a first handle end and receive a welding cable at a second handle end, the handle comprising a conductive inner handle receptacle configured to electrically connect with the electrically conductive portion of the electrode holding head and a cable conductor of the welding cable, and an insulating outer handle cover encircling the inner hand receptacle. In some examples, the welding system further comprises the tracking system, the tracking system having a tracking sensor configured to capture tracking sensor data and processing circuitry configured to analyze the tracking sensor data to identify a marker position and/or a marker orientation of the trackable marker, and determine a stick electrode position and/or a stick electrode orientation of the stick electrode based on the marker position and/or marker orientation.

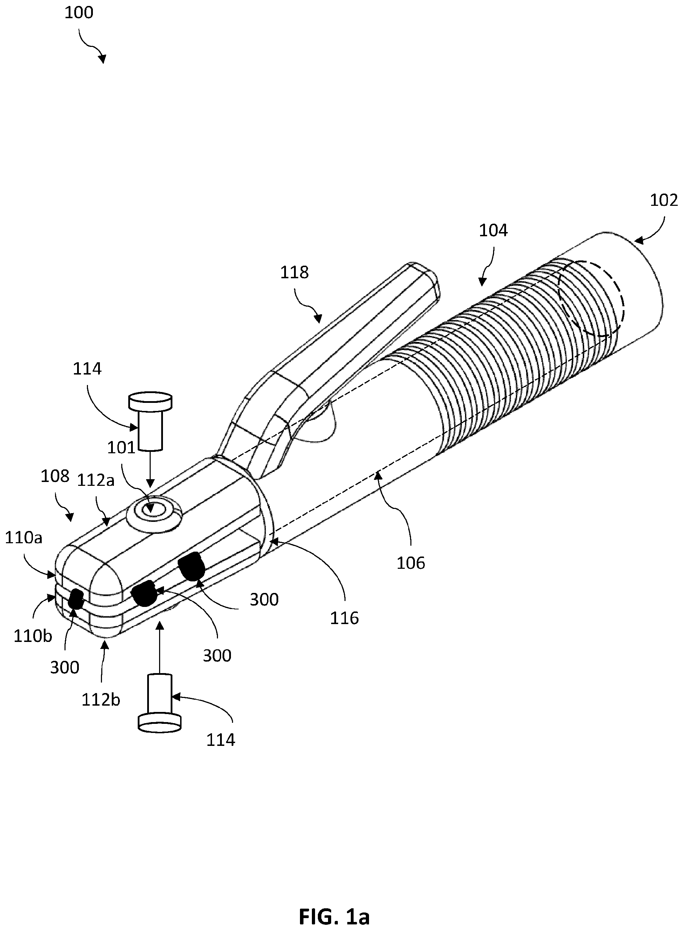

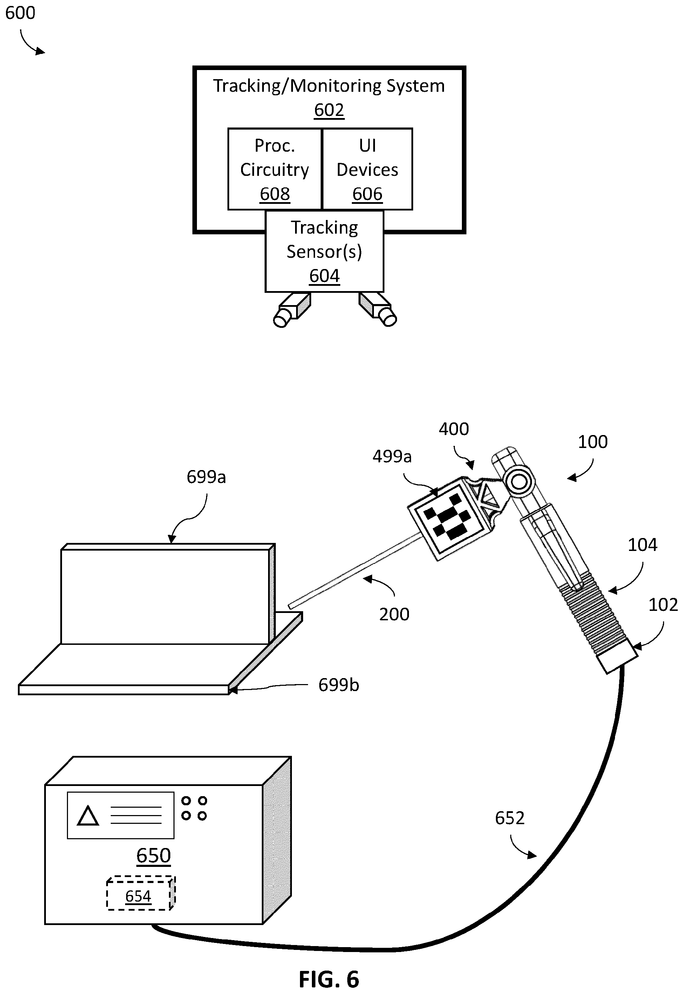

FIGS. 1a-1c shows examples of a stick electrode holder 100. In some examples, the stick electrode holder 100 is used to conduct welding-type power from a welding-type power supply 650 to a stick electrode 200 held by the stick electrode holder 100 (see, e.g., FIG. 6). In some examples, the welding-type power conducted to the stick electrode 200 by the stick electrode holder 100 is used to perform welding-type operations (e.g., via an electrical arc).

In the example of FIG. 6, a connecting end 102 of the handle 104 of the stick electrode holder 100 is connected to an end of a tool cable 652. In some examples, the tool cable 652 routes welding-type power from the welding-type power supply 650 to the stick electrode holder 100. As shown, the welding-type power supply 650 includes power conversion circuitry 654 configured to convert input power (e.g., from a generator, battery, mains power, etc.) to welding-type output power that can be conducted by the tool cable 652 to the connecting end 102 of the handle 104 of the stick electrode holder 100.

In the example of FIG. 1a, the connecting end 102 of the handle 104 of the stick electrode holder 100 is hollow, with an internal bore that leads to a cable connector 106 in the handle 104 of the stick electrode holder 100. In some examples, the cable connector 106 connects to exposed wiring, and/or an electrically conductive portion, in/of the tool cable 652.

In the example of FIG. 1a, the cable connector 106 of the stick electrode holder 100 is shown positioned within and/or covered/encircled by the handle 104. In some examples, the handle 104 is comprised of an electrically insulating material (e.g., rubber, plastic, polymer, etc.). In some examples, the cable connector 106 within the handle 104 is comprised of a metallic and/or electrically conductive material.

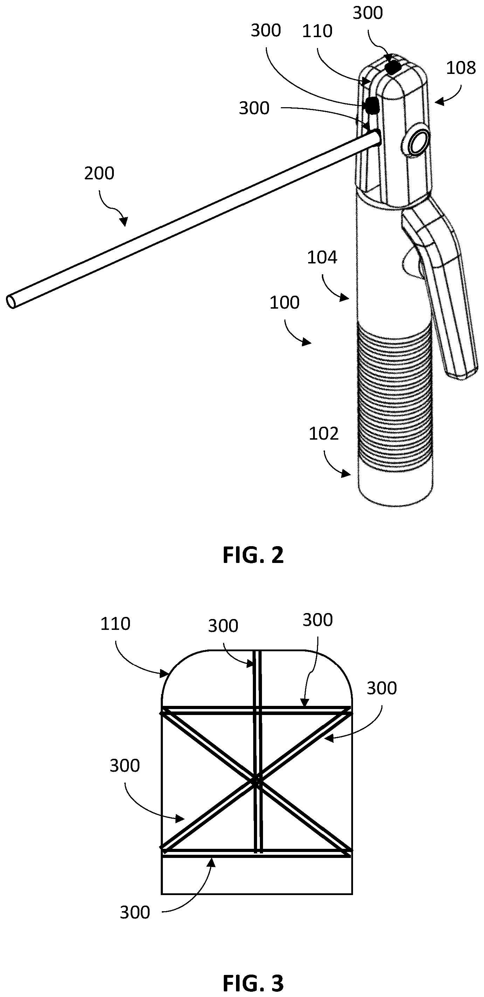

In the example of FIG. 1a, the handle 104 is shown connected to an electrode holding head 108 of the stick electrode holder 100. In some examples, the electrode holding head 108 is configured to hold a stick electrode 200 (see, e.g., FIG. 2). As shown, the electrode holding head 108 is connected at an opposite end of the handle 104 from the connecting end 102 of the handle 104.

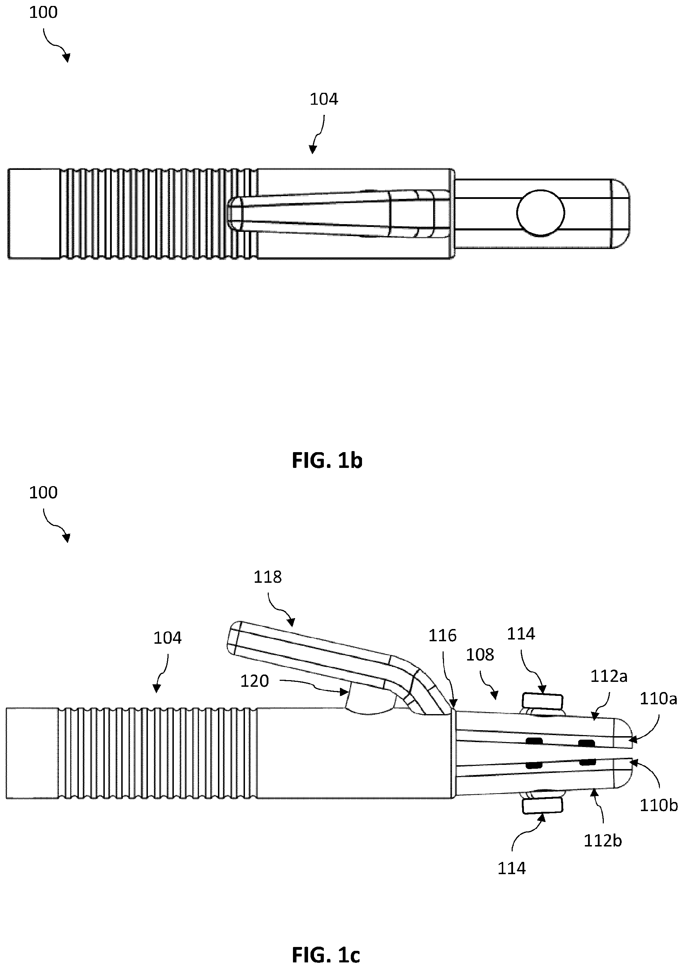

In the example of FIG. 1a and 1c, the electrode holding head 108 is shown as comprising a pair of jaws 110: a first jaw 110b and a second jaw 110b. In some examples, the jaws 110 are comprised of an electrically conductive material (e.g., copper, brass, iron, steel, etc.). In some examples, the jaws 110 are configured to clamp together over and/or around a stick electrode 200, and thereby hold the stick electrode 200 in the jaws 110 (see, e.g., FIG. 2).

In the example of FIG. 2, a stick electrode 200 is shown held by the jaws 110. As shown, the stick electrode is a relatively long and/or thin cylindrical rod. In some examples, the stick electrode 200 is comprised of an electrically conductive material (e.g., iron, steel, metallic alloy, etc.). In some examples, the stick electrode is configured to perform a welding-type operation via conducted welding-type electrical power (received from the welding-type power supply 650 through the tool cable 652, cable connector 106, and/or jaws 110).

In the example of FIG. 2, the stick electrode 200 is shown held in an electrode slot 300 formed in the jaws 110 of the stick electrode holding head 108. FIG. 3 is a diagram depicting an example arrangement of electrode slots 300 within the jaw 110. In some examples, the different electrode slots 300 in the jaws 110 allow for the jaws 110 of the stick electrode holding head 108 to securely hold the stick electrode 200 in a plurality of different orientations (and/or at a plurality of different angles), such as might be useful to accommodate different situations (e.g., with different operator preferences, welding positions, welding workpieces 699, welding processes, welding parameters, etc.).

In the examples of FIGS. 1a and 1c, the jaws 110 are shown as being connected to and/or covered by jaw covers 112. In some examples, the jaw covers 112 are composed of electrically insulating material (e.g., rubber, plastic, polymer, etc.). The jaws 110 and jaw covers 112 are shown as being connected together via fasteners 114 inserted through aligned fastener holes 101 of the jaws 110 and jaw covers 112.

In the example of FIGS. 1a and 1c, the jaws 110 connect together at a jaw joint 116. As shown in FIG. 1a, the jaws 110 also connect to the cable connector 106 through the jaw joint 116. In some examples, the jaws 110 can rotate and/or move away from (and/or towards) one another via the jaw joint 116 (e.g., to open the jaws to receive/move the stick electrode 200 and/or clamp the jaws closed around the stick electrode 200).

In the examples of FIG. 1a and 1c, the stick electrode holder 100 is further shown as including a lever 118 connected to the jaw joint 116. In some examples, a force on an end of the lever 118 opposite the end attached to the jaw joint 116 will move the jaws 110 apart via the jaw joint 116. In some examples, the jaws 110 are spring biased towards one another such that the jaws 110 clamp together (e.g., around the stick electrode 200) in the absence of a counteracting force on the lever 118.

In the example of FIG. 1c, the lever 118 of the stick electrode holder 100 is shown attached to the handle 104 via a spring 120. In some examples, the spring 120 biases the lever 118 away from the handle 104 such that no force is imparted by the lever 118 on the jaw joint 116 (and/or jaws 110) in the absence of some external supplied force (e.g., applied by a human operator). Thus, in some examples, an operator may use the lever 118 to open the jaws 110 of the stick electrode holder 100, insert a stick electrode 200 into an electrode slot 300 of the jaws 110, release the lever 118 to allow the jaws 110 to clamp around and/or hold the stick electrode 200, and then proceed to perform a welding-type operation using the stick electrode 200 and/or stick electrode holder 100.

In some examples, it is desirable to track and/or monitor the technique of an operator when the operator performs a welding-type operation using the stick electrode 200 and/or stick electrode holder 100. FIG. 6, for example, shows a welding-type system 600 that includes a tracking and/or monitoring system 602 configured to track and/or monitor the technique of an operator when the operator performs a welding-type operation using the stick electrode 200 and/or stick electrode holder 100.

In the example of FIG. 6, the monitoring system 602 is shown as including tracking sensors 604. In some examples, the tracking sensors 604 comprise one or more acoustic sensors, ultrasonic sensors, infrared (IR) sensors, IR projectors/detectors, near field communication (NFC) sensors, radio frequency identification (RFID) sensors, thermal sensors, optical sensors, and/or camera sensors. In some examples, the monitoring system 602 uses sensor data captured by the tracking sensor(s) 604 to track, monitor, and/or identify the technique (and/or technique parameters) of the operator when the operator performs a welding-type operation using the stick electrode 200 and/or stick electrode holder 100.

In the example of FIG. 6, the monitoring system 602 is also shown as including one or more user interface (UI) devices 606. In some examples, the one or more UI devices 606 include one or more input devices and/or output devices. Examples of input devices include touch screens, keyboards, microphones, buttons, knobs, levers, switches, dials, slides, and/or other input devices. Examples of output devices include display screens, speakers, lights, haptic devices, and/or other output devices. In some examples, operators (and/or others) are informed of tracked, monitored, and/or identified technique parameters via the UI device(s) 606.

In the example of FIG. 6, the monitoring system 602 is further shown as including processing circuitry 608. In some examples, the processing circuitry 608 comprises one or more processors. In some examples, the processing circuitry 608 uses tracking sensor data captured by the tracking sensor(s) 604 to track, monitor, and/or identify the technique (and/or technique parameters) of an operator when the operator performs a welding-type operation using the stick electrode 200 and/or stick electrode holder 100.

In some examples, in order for the monitoring system 602 to monitor the technique (and/or technique parameters) of the operator when the operator performs a welding-type operation using the stick electrode 200 and/or stick electrode holder 100, the monitoring system 602 must track and/or monitor the position(s) and/or orientation(s) of the stick electrode 200. In some examples, one way to track and/or monitor the position(s) and/or orientation(s) of the stick electrode 200 is to track and/or monitor the position and/or orientation of the stick electrode holder 100. However, while, in some examples, the monitoring system 602 can use tracking sensor data captured by one or more tracking sensors 604 to try and track the position(s) and/or orientation(s) of the stick electrode holder 100, such tracking can be a difficult task unaided.

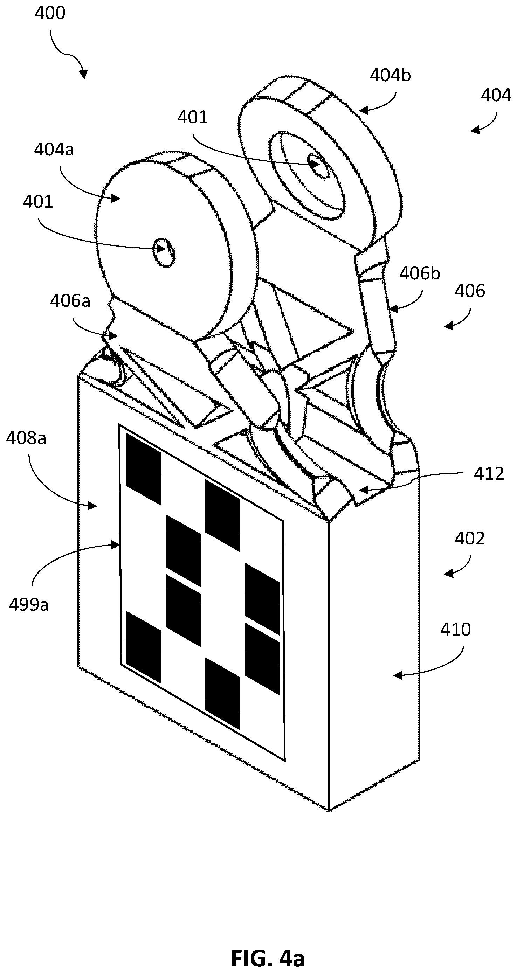

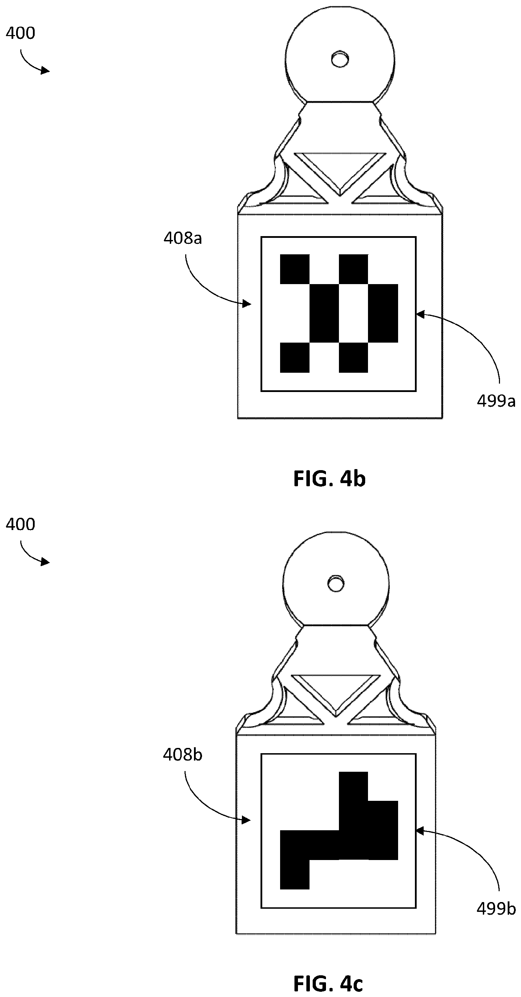

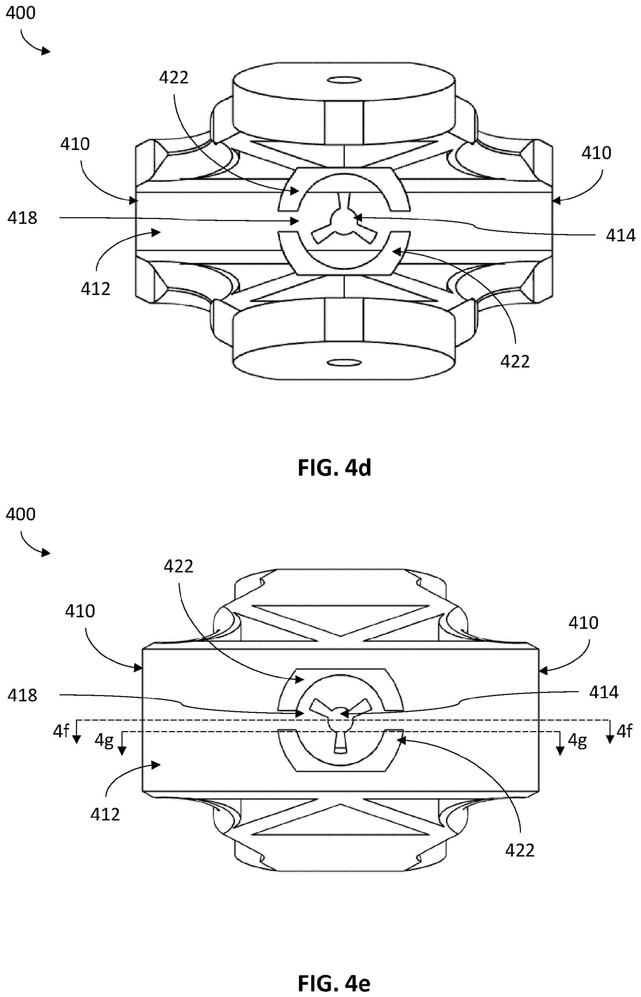

In some examples, trackable markers 499 (e.g., fiducial markers) can be used to aid in tracking of position and/or orientation (see, e.g., FIG. 4a and/or FIG. 6). For example, the markers 499 may be easily recognizable by the (e.g., processing circuitry 608 of the) monitoring system 602 in (e.g., image) sensor data captured by the tracking sensor(s) 604 of the monitoring system 602. However, in some examples, trackable markers 499 require approximately flat and/or rectangular surfaces to be effective.

Meanwhile, the stick electrode 200 and stick electrode holder 100 are shown (e.g., in FIGS. 1-2) as being comprised of approximately curved and/or cylindrical surfaces. This can make it difficult to use trackable markers 499 to track many stick electrodes 200 and/or stick electrode holders 100 (barring some potentially expensive and/or rare customization(s) and/or modification(s)).

FIGS. 4a-4g show examples of trackable markers 499 (e.g., fiducial markers) on a tracking attachment 400. In some examples, some or all of the tracking attachment 400 is comprised of an electrically and/or thermally insulating material (e.g., rubber). In some examples, the tracking attachment 400 can be easily attached to many stick electrode holders 100 without the need for customization and/or modification. In some examples, the ability to attach the tracking attachment 400 (and thus the tracking marker 499) to the stick electrode holder 100 allows the monitoring systems 602 to more easily track the position(s) and/or orientation(s) of the stick electrode holder 100 and/or stick electrode 200 (e.g., by tracking the marker(s) 499 of the tracking attachment 400).

In the example of FIG. 4a, the tracking attachment 400 includes an electrode cover 402 connected to a pair of cover connectors 404 through flexible coupling members 406. In the examples of FIG. 4a, the electrode cover 402 is shaped as a rectangular prism. The electrode cover 402 is also shown as including two flat approximately rectangular marker walls 408 on opposite sides of the electrode cover 402 from one another (see, e.g., FIGS. 4b-4c). The electrode cover 402 is further shown as including two approximately rectangular connecting walls 410, and two approximately rectangular end walls 412, that connect together the two marker walls 408 (see, e.g., FIGS. 4d - 4e).

In the examples of FIGS. 4a-4c, the marker walls 408 of the electrode cover 402 are shown as being relatively flat and approximately rectangular. In some examples, the shape and/or size of the marker walls 408 are ideal to accommodate trackable markers 499. As shown, each marker wall 408 includes a different trackable marker 499 (e.g., to help the monitoring system 602 distinguish between the two when tracking). In some examples, each marker wall 408 may instead include the same trackable marker 499.

In some examples, one or more of the trackable markers 499 are attached to one or more of the marker walls 408 via an adhesive, fastener, and/or other mechanism. In some examples, one or more of the trackable markers 499 are etched and/or painted onto one or more of the marker walls 408 (e.g., via laser, sharp object, pencil, pen, paintbrush, etc.). While shown as pattern markers in the examples of FIGS. 4a-4c, in some examples, one or more of the trackable markers 499 may additionally, or alternatively, comprise reflective markers and/or light emitting markers (e.g., light emitting diodes (LEDs)).

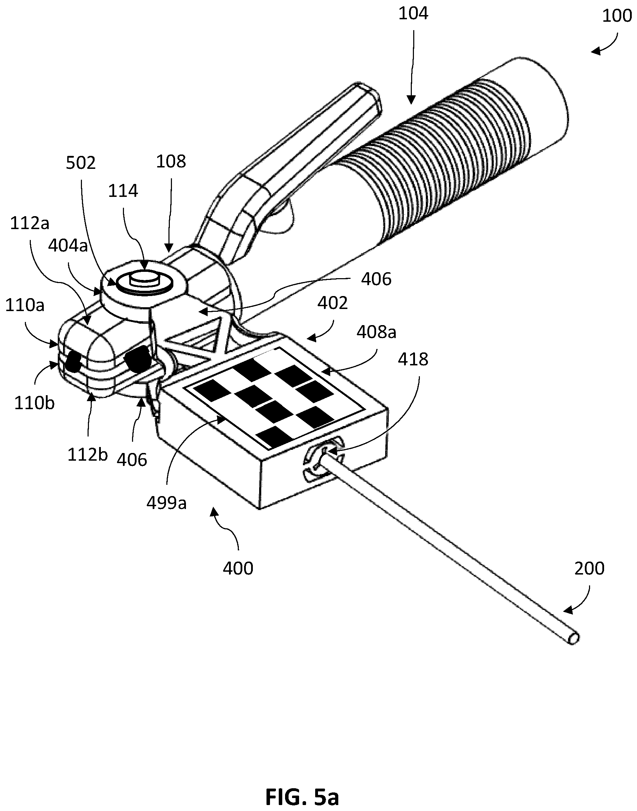

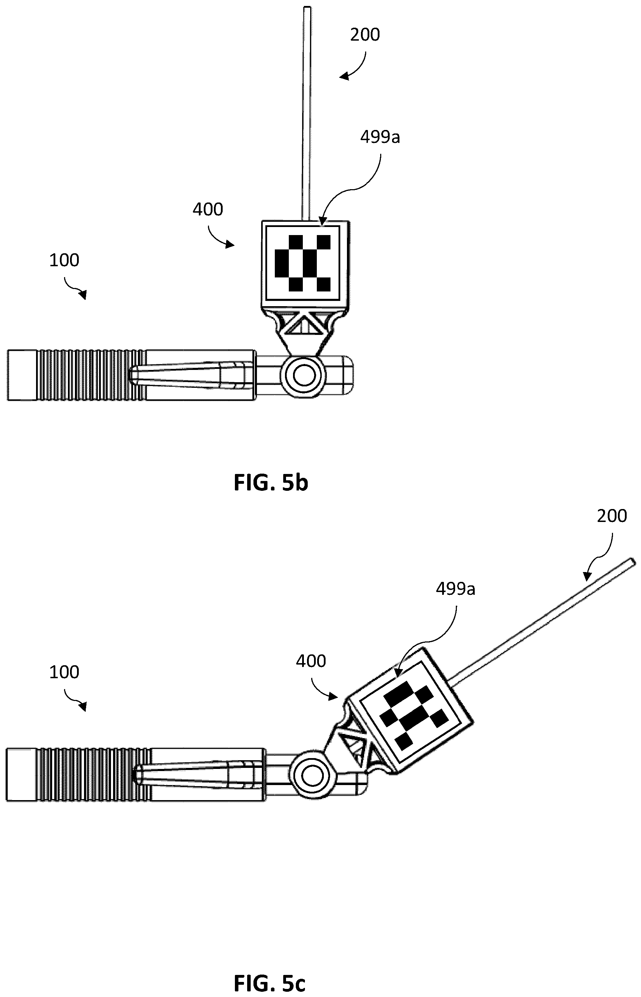

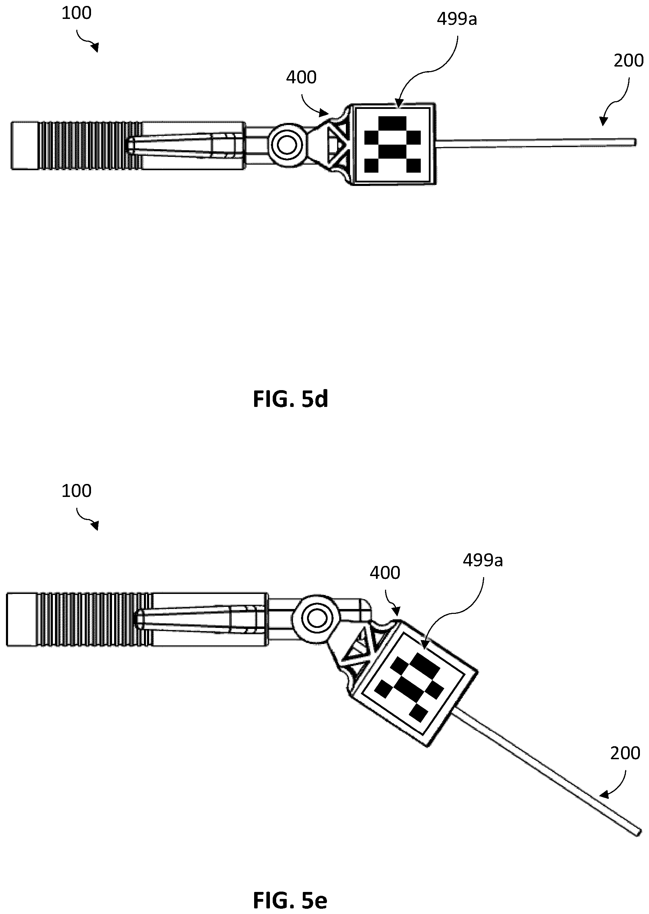

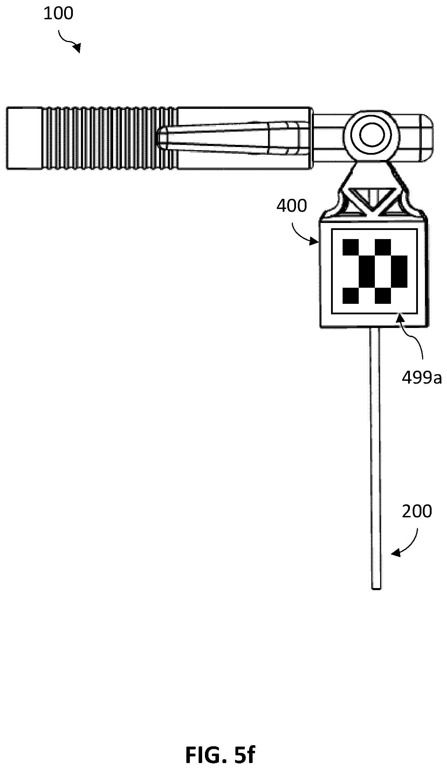

In some examples, the electrode cover 402 is configured to receive the stick electrode 200, such that the stick electrode 200 extends through the electrode cover 402. In some examples, when the stick electrode 200 extends through the electrode cover 402, the electrode cover 402 "covers" at least part of the stick electrode 200 (see, e.g., FIGS. 5a-5e). In some examples, when the electrode cover 402 receives and/or covers at least part of the stick electrode 200, the position(s) and/or orientation(s) of the stick electrode 200 (and/or the stick electrode holder 100) can be tracked by tracking the trackable marker(s) 499 on the electrode cover 402.

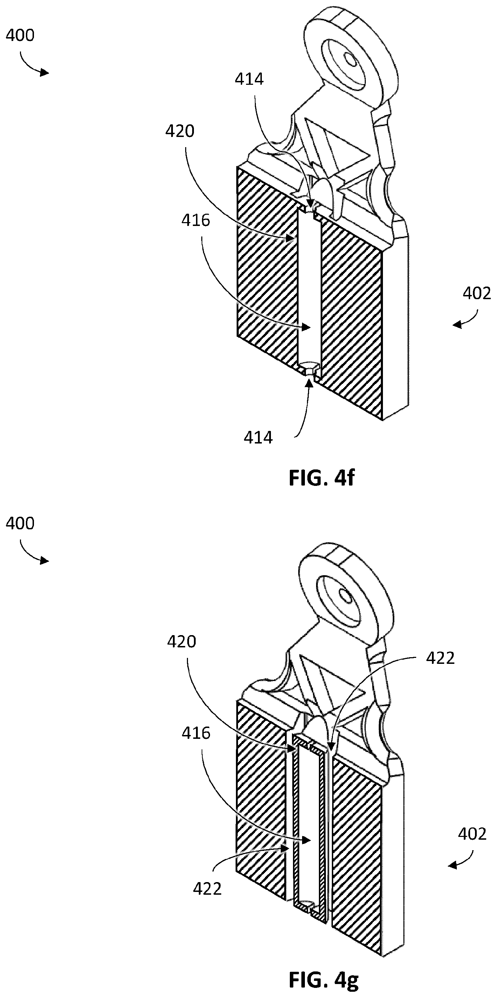

As shown in FIGS. 4d-4f, each end wall 412 of the electrode cover 402 includes an aperture 414. In some examples, each aperture 414 is configured to receive the stick electrode 200 therethrough. As shown in FIG. 4f, the apertures 414 of the electrode cover 402 lead to an electrode channel 416 that extends between the apertures 414.

In the example of FIGS. 4d-4e, each end wall 412 of the electrode cover 402 is further shown as including a circular grommet 418. Each grommet 418 comprises a plurality of petals that extend from a periphery of the circular grommet 418 towards the aperture 414 at the center of the grommet 418. As shown, the petals of the grommets 418 at least partially cover and/or close the apertures 414 of the end walls 412 when there is no stick electrode 200 received in and/or extending through the apertures 414 and/or electrode channel 416.

In some examples, the petals of the grommets 418 are flexible. In some examples, the petals of the grommets 418 are predisposed/biased towards covering/closing the aperture 414. In some examples, when a stick electrode 200 extends through the apertures 414, electrode channel 416, and/or electrode cover 402 (as shown, for example, in FIG. 5a), the biasing causes the petals of the grommets 418 to press against, close over, and/or hold the stick electrode 200 at an approximate center of the apertures 414 and/or electrode channel416 (e.g., regardless of the size of the stick electrode 200).

In the examples of FIGS. 4f-4g, the electrode channel 416 extends through an approximate center of the electrode cover 402 (and/or parallel to a central axis of the electrode cover 402). As the electrode channel 416 extends through an approximate center of the electrode cover 402, the electrode channel416 extends approximately parallel to a central axis of the marker wall 408. As the electrode channel 416 extends approximately parallel to a central axis of the marker wall 408, and the markers 499 are approximately centered on the marker wall 408, the electrode channel 416 also extends approximately parallel to a central axis of the trackable markers 499 on the marker wall 408.

Thus, as shown in FIG. 5a, when the stick electrode 200 extends through the tracking attachment 400, the stick electrode 200 extends through an approximate center of the electrode cover 402. Further, when the stick electrode 200 extends through the tracking attachment 400, the stick electrode 200 extends approximately parallel to a central axis of the trackable marker 499 and/or marker wall 408 of the electrode cover 402. In some examples, this centralized geometry may allow the monitoring system 602 to more easily determine a position and/or orientation of the stick electrode 200 based on a tracked position, orientation, and/or geometry of the trackable markers 499 (e.g., and/or potentially without requiring additional calibration).

In some examples, the electrode channel 416 is sized to fit the stick electrode 200. In some examples, the electrode channel 416 is sized to fit a variety of different sizes (e.g., diameters) of stick electrodes. In the examples of FIGS. 4f-4g, the electrode channel 416 is shown as being defined by a channel wall 420 that encircles the electrode channel 416.

In the examples of FIGS. 4d-4e and 4g, a majority of the channel wall 420 is shown as being encircled by, and/or adjacent to, two insulating conduits 422. As shown, the two insulating conduits 422 extend approximately parallel to, and/or centered around, the electrode channel 416. Each insulating conduit 422 is shown as being approximately shaped like the perimeter of a half cylinder. Two approximately rectangular connecting walls connect the channel wall 420 of the electrode channel 416 to the rest of the electrode cover 402, and separate the insulating conduits 422 from one another.

In some examples, the insulating conduits 422 provide a thermal separation between the channel wall 420 of the electrode channel 416 and the rest of the electrode cover 402. In some examples, this thermal separation provides an extra layer of thermal insulation to the stick electrode 200 when the stick electrode 200 is positioned in and/or extends through the electrode channel 416. This thermal insulation, separation, and/or isolation helps to ensure the tracking attachment 400 remains relatively cool even when the stick electrode 200 heats up (e.g., during a welding-type operation), which can help to ensure the trackable markers 499 do not come unattached (e.g., when attached via adhesive) and/or become distorted (e.g., when painted on). In some examples, the conduits 422 additionally, or alternatively, ensure the marker walls 408 will not bow and/or deform when a stick electrode 200 extends through the electrode channel 416 (e.g., due to movement, bending, and/or deformation of the grommet 418 of the electrode cover 402).

In the example of FIG. 4a, the electrode cover 402 is attached to two cover connectors 404 via flexible coupling members 406 (e.g., a flexible lattice) of the tracking attachment 400. In some examples, the tracking attachment 400 is attached and/or connected to the stick electrode holder 100 via the cover connectors 404 (see, e.g., FIG. 5a).

In some examples, the tracking attachment 400 may not be (e.g., directly) attached to the stick electrode holder 402. For example, the tracking attachment may only be (e.g., directly) attached and/or connected to the stickelectrode 200 (e.g., through the electrode cover 402). In some examples where the tracking attachment 400 is not (e.g., directly) attached to the stick electrode holder 402, the tracking attachment 400 may not include the flexible coupling member(s) 406 and/or cover connectors 404.

In the example of FIG. 4a, each cover connector 404 includes a fastener hole 401 that is sized similarly and/or identically to the fastener hole(s) 101 of the stick electrode holder 100. In some examples, the same fasteners 114 that are used to connect the jaw covers 112 with the jaws 110 (e.g., via insertion through fastener holes 101 of the jaw covers 112 and/or jaws 110) can conveniently be used to connect the tracking attachment 200 and/or cover connectors 404 to the electrode holding head 108 of the stick electrode holder 100. In particular, the fasteners 114 can be inserted through the fastener holes 401 of the cover connectors 404 and the fastener holes 101 of the jaw covers 112 and jaws 110, when the two sets of fastener holes 101, 401 are aligned, to connect the tracking attachment 200 and/or cover connectors 404 to the electrode holding head 108 of the stick electrode holder 100. FIG. 5a shows an example of the tracking attachment 400 attached to the stick electrode holder 100 through fasteners 114 (e.g., inserted through aligned fastener holes 101, 401 shown in FIGS. 1a, 4a).

In the example of FIG. 5a, washers 502 are positioned between the heads of the fasteners 114 and the cover connectors 404 when the fasteners 114 are used to connect the cover connectors 404 to electrode holding head 108 of the stick electrode holder 100. In some examples, the washers 502 facilitate the ability of the tracking attachment 400 to rotate about the connection of the fasteners 114 to the electrode holding head 108. The fasteners 114 and washers 502 thus effectively establish a tracking attachment joint, with a joint/rotation axis defined by and/or extending between the fasteners 114 and/or fastener holes 101, 104.

In some examples, the tracking attachment joint allows for the tracking attachment 400 to rotate about the electrode holding head 108 of the stick electrode 200. As shown in the example of FIG. 5a, when the tracking attachment 400 is attached to the electrode holding head 108 of the stick electrode holder 100, there is enough a distance between the cover connectors 404 and electrode cover 402, and enough of a gap between the flexible coupling members 406, that the tracking attachment 400 can rotate about the tracking attachment without the electrode holding head 108 impeding the rotation (though the handle 104 may impede complete 360 degree rotation). In some examples, the flexible coupling members 406 are also flexible (and/or stretchable) enough to allow the jaws 110 of the electrode holding head 108 to be opened (e.g., to receive and/or move the stick electrode 200) while the tracking attachment 400 is attached to the electrode holding head 108 of the stick electrode holder 100.

In some examples, the ability of the tracking attachment 400 to rotate about the electrode holding head 108 of the stick electrode holder 100 allows the tracking attachment 400 to be used effectively (e.g., with the stick electrode 200 centered with respect to the trackable marker 499) regardless of which electrode slot 300 of the electrode holding head 108 is used to hold the stick electrode 200. FIGS. 5b-5e show examples of the tracking attachment 400 rotated (e.g., about the tracking attachment joint) to different orientations corresponding to the different orientations of the electrode slots 300 of the stick electrode holder 100. As shown, with each rotation, the stick electrode 200 remains centered with respect to the trackable marker 499a regardless of the orientation of the tracking attachment 400 and/or the orientation of the stick electrode 200. In some examples, the flexible coupling members 406 are also flexible enough that the tracking attachment 400 can receive, hold, and/or center the stick electrode 200 when the stick electrode 200 is held in either of the parallel horizontal electrode slots 300 shown in FIG. 3, without the need for further rotation.

The disclosed example tracking attachment 400 allows for trackable markers 499 to be easily attached to stick electrodes 200 and/or stick electrode holder 100, thereby removing the need for costly customized/modified stick electrode holders and/or stick electrodes. In some examples, the tracking attachment 400 includes one or more trackable markers 499 that can be relatively easily detected and/or tracked by a monitoring system 602. In some examples, the trackable marker(s) 499 of the tracking attachment 400 facilitate tracking and/or monitoring of operator technique by the monitoring system 602, by aiding in the tracking and/or monitoring of the position(s)/orientation(s) of the stick electrode 200 and/or stick electrode holder 100 by the monitoring system 602.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/ory" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more nonlimiting examples, instances, or illustrations.

As used herein, the term "approximately," when applied to an angle and/or orientation, means within 5 degrees of the specified angle and/or orientation. As used herein, the term "approximately," when applied to a position, means within 5 centimeters of the specified position.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, the term "processor" and/or "processing circuitry" means processing devices, apparatus, programs, circuits, components, systems, and subsystems, whether implemented in hardware, tangibly embodied software, or both, and whether or not it is programmable. The term "processor" and/or "processing circuitry" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor and/or processing circuitry may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

The term "power" is used throughout this specification for convenience, but also includes related measures such as energy, current, voltage, and/or enthalpy.

As used herein, welding-type refers to actual live, and/or simulated, welding (including laser welding and/or hot wire welding), cladding (including laser cladding), brazing, plasma cutting, induction heating, carbon arc cutting or gouging, hot wire preheating, and/or resistive preheating.

As used herein, welding-type power refers to power suitable for welding (including laser welding and/or hot wire welding), cladding (including laser cladding), brazing, plasma cutting, induction heating, carbon arc cutting or gouging, hot wire preheating, and/or resistive preheating.

As used herein, a welding-type power supply and/or welding-type power source refers to a device capable of, when input power is applied thereto, supplying output power suitable for welding (including laser welding and/or hot wire welding), cladding (including laser cladding), brazing, plasma cutting, induction heating, carbon arc cutting or gouging, hot wire preheating, and/or resistive preheating; including but not limited to transformer-rectifiers, inverters, converters, resonant power supplies, quasi-resonant power supplies, switch-mode power supplies, etc., as well as control circuitry and other ancillary circuitry associated therewith.
Certain embodiments of the invention are described in the following clauses:
Clause 1. A tracking attachment for an electrode holder used to hold a stick electrode, the tracking attachment comprising:
   an electrode cover comprising a trackable marker that can be detected by a tracking system, and
   a cover connector coupled to the electrode cover, the cover connector configured for connection with the electrode holder.
Clause 2. The tracking attachment of clause 1, wherein the cover connector is configured for connection to an electrode holding head of the electrode holder.
Clause 3. The tracking attachment of clause 2, wherein the cover connector is configured for connection to the electrode holding head via a fastener, the fastener also connecting a first portion of the electrode holding head to a second portion of the electrode holding head.
Clause 4. The tracking attachment of clause 3, wherein the first portion is an insulating portion, and the second portion is an electrically conductive portion.
Clause 5. The tracking attachment of clause 2, wherein the cover connector comprises a first cover connector, the tracking attachment further comprising a second cover connector coupled to the electrode cover, the first cover connector being configured for connection with a first side of the electrode holding head, and the second cover connector being configured for connection with a second side of the electrode holding head that is opposite the first side of the electrode holding head.
Clause 6. The tracking attachment of clause 5, wherein the first and second sides of the electrode holding head are connected at a joint such that the first and second sides can be pivoted away from one another about the joint to open and receive the stick electrode, or can be rotated towards one another about the joint to close around and hold the stick electrode.
Clause 7. The tracking attachment of clause 2, wherein the electrode holding head is configured to hold the stick electrode at a plurality of different stick electrode orientations relative to the electrode holding head, and the cover connector is configured for a rotatable connection with the electrode holding head, such that the electrode cover can be moved about the rotatable connection to a position collinear with the stick electrode regardless of at which stick electrode orientation the stick electrode is held.
Clause 8. The tracking attachment of clause 2, wherein the electrode holding head is configured to hold the stick electrode at a plurality of different stick electrode positions relative to the electrode holding head, and the cover connector is coupled to the electrode cover via a flexible coupling member that can be bent or stretched to allow for translation of the electrode cover between different electrode cover positions that are collinear with the stick electrode when the stick electrode is held at the different stick electrode positions.
Clause 9. The tracking attachment of clause 1, wherein the electrode cover further includes an electrode channel sized to fit the stick electrode.
Clause 10. The tracking attachment of clause 9, wherein the electrode channel extends through an approximate center of the electrode cover, such that the approximate center of the trackable marker will be collinear with the stick electrode when the stick electrode extends through the electrode channel.
Clause 11. A welding system, comprising:
   a tracking attachment for an electrode holder used to hold a stick electrode, the tracking attachment comprising:
   an electrode cover comprising a trackable marker that can be detected by a tracking system, and
   a cover connector coupled to the electrode cover, the cover connector configured for connection with the electrode holder.
Clause 12. The welding system of clause 11, wherein the cover connector is configured for connection to an electrode holding head of the electrode holder.
Clause 13. The welding system of clause 12, wherein the cover connector is configured for connection to the electrode holding head via a fastener, the fastener also connecting a first portion of the electrode holding head to a second portion of the electrode holding head, wherein the first portion is an insulating portion, and the second portion is an electrically conductive portion.
Clause 14. The welding system of clause 12, wherein the cover connector comprises a first cover connector, the tracking attachment further comprising a second cover connector coupled to the electrode cover, the first cover connector being configured for connection with a first side of the electrode holding head, and the second cover connector being configured for connection with a second side of the electrode holding head that is opposite the first side of the electrode holding head, the first and second sides of the electrode holding head being connected at a joint such that the first and second sides can be pivoted away from one another about the joint to open and receive the stick electrode, or can be rotated towards one another about the joint to close around and hold the stick electrode.
Clause 15. The welding system of clause 12, wherein the electrode holding head is configured to hold the stick electrode at a plurality of different stick electrode orientations relative to the electrode holding head, and the cover connector is configured for a rotatable connection with the electrode holding head, such that the electrode cover can be moved about the rotatable connection to a position collinear with the stick electrode regardless of at which stick electrode orientation the stick electrode is held.
Clause 16. The welding system of clause 12, wherein the electrode holding head is configured to hold the stick electrode at a plurality of different stick electrode positions relative to the electrode holding head, and the cover connector is coupled to the electrode cover via a flexible coupling member that can be bent and/or stretched to allow for translation of the electrode cover between different electrode cover positions that are collinear with the stick electrode when the stick electrode is held at the different stick electrode positions.
Clause 17. The welding system of clause 11, wherein the electrode cover further includes an electrode channel sized to fit the stick electrode.
Clause 18. The welding system of clause 17, wherein the electrode channel extends through an approximate center of the electrode cover, such that the approximate center of the trackable marker will be collinear with the stick electrode when the stick electrode extends through the electrode channel.
Clause 19. The welding system of clause 11, further comprising the stick electrode holder, the stick electrode holder comprising:
   an electrode holding head configured to hold the stick electrode at a plurality of different orientations, the electrode holding head comprising an electrically insulating portion and an electrically conductive portion, the electrically conductive portion being configured to contact the stick electrode,
   a handle connected to the electrode holding head at a first handle end and receive a welding cable at a second handle end, the handle comprising
      a conductive inner handle receptacle configured to electrically connect with the electrically conductive portion of the electrode holding head and a cable conductor of the welding cable, and
      an insulating outer handle cover encircling the inner hand receptacle.
Clause 20. The welding system of clause 11, further comprising the tracking system, the tracking system having a tracking sensor configured to capture tracking sensor data and processing circuitry configured to analyze the tracking sensor data to identify a marker position and/or a marker orientation of the trackable marker, and determine a stick electrode position and/or a stick electrode orientation of the stick electrode based on the marker position and/or marker orientation.

## Claims

1. A tracking attachment for an electrode holder used to hold a stick electrode, the tracking attachment comprising:
an electrode cover comprising a trackable marker that can be detected by a tracking system, and
a cover connector coupled to the electrode cover, the cover connector configured for connection with the electrode holder.

2. The tracking attachment of claim 1, wherein the cover connector is configured for connection to an electrode holding head of the electrode holder.

3. The tracking attachment of claim 2, wherein the cover connector is configured for connection to the electrode holding head via a fastener, the fastener also connecting a first portion of the electrode holding head to a second portion of the electrode holding head, and optionally wherein the first portion is an insulating portion, and the second portion is an electrically conductive portion.

4. The tracking attachment of claim 2 or claim 3, wherein the cover connector comprises a first cover connector, the tracking attachment further comprising a second cover connector coupled to the electrode cover, the first cover connector being configured for connection with a first side of the electrode holding head, and the second cover connector being configured for connection with a second side of the electrode holding head that is opposite the first side of the electrode holding head, and optionally
wherein the first and second sides of the electrode holding head are connected at a joint such that the first and second sides can be pivoted away from one another about the joint to open and receive the stick electrode, or can be rotated towards one another about the joint to close around and hold the stick electrode.

5. The tracking attachment of any one of claims 2 to 4, wherein the electrode holding head is configured to hold the stick electrode at a plurality of different stick electrode orientations relative to the electrode holding head, and the cover connector is configured for a rotatable connection with the electrode holding head, such that the electrode cover can be moved about the rotatable connection to a position collinear with the stick electrode regardless of at which stick electrode orientation the stick electrode is held.

6. The tracking attachment of any one of claims 2 to 5, wherein the electrode holding head is configured to hold the stick electrode at a plurality of different stick electrode positions relative to the electrode holding head, and the cover connector is coupled to the electrode cover via a flexible coupling member that can be bent or stretched to allow for translation of the electrode cover between different electrode cover positions that are collinear with the stick electrode when the stick electrode is held at the different stick electrode positions.

7. The tracking attachment of any one of claims 1 to 6, wherein the electrode cover further includes an electrode channel sized to fit the stick electrode, and optionally wherein the electrode channel extends through an approximate center of the electrode cover, such that the approximate center of the trackable marker will be collinear with the stick electrode when the stick electrode extends through the electrode channel.

8. A welding system, comprising:
a tracking attachment for an electrode holder used to hold a stick electrode, the tracking attachment comprising:
an electrode cover comprising a trackable marker that can be detected by a tracking system, and
a cover connector coupled to the electrode cover, the cover connector configured for connection with the electrode holder.

9. The welding system of claim 8, wherein the cover connector is configured for connection to an electrode holding head of the electrode holder.

10. The welding system of claim 9, wherein the cover connector is configured for connection to the electrode holding head via a fastener, the fastener also connecting a first portion of the electrode holding head to a second portion of the electrode holding head, wherein the first portion is an insulating portion, and the second portion is an electrically conductive portion.

11. The welding system of claim 9 or claim 10, wherein the cover connector comprises a first cover connector, the tracking attachment further comprising a second cover connector coupled to the electrode cover, the first cover connector being configured for connection with a first side of the electrode holding head, and the second cover connector being configured for connection with a second side of the electrode holding head that is opposite the first side of the electrode holding head, the first and second sides of the electrode holding head being connected at a joint such that the first and second sides can be pivoted away from one another about the joint to open and receive the stick electrode, or can be rotated towards one another about the joint to close around and hold the stick electrode.

12. The welding system of any one of claims 9 to 11, wherein the electrode holding head is configured to hold the stick electrode at a plurality of different stick electrode orientations relative to the electrode holding head, and the cover connector is configured for a rotatable connection with the electrode holding head, such that the electrode cover can be moved about the rotatable connection to a position collinear with the stick electrode regardless of at which stick electrode orientation the stick electrode is held, and/or
wherein the electrode holding head is configured to hold the stick electrode at a plurality of different stick electrode positions relative to the electrode holding head, and the cover connector is coupled to the electrode cover via a flexible coupling member that can be bent and/or stretched to allow for translation of the electrode cover between different electrode cover positions that are collinear with the stick electrode when the stick electrode is held at the different stick electrode positions.

13. The welding system of any one of claims 8 to 12, wherein the electrode cover further includes an electrode channel sized to fit the stick electrode, and optionally
wherein the electrode channel extends through an approximate center of the electrode cover, such that the approximate center of the trackable marker will be collinear with the stick electrode when the stick electrode extends through the electrode channel.

14. The welding system of any one of claims 8 to 13, further comprising the stick electrode holder, the stick electrode holder comprising:
an electrode holding head configured to hold the stick electrode at a plurality of different orientations, the electrode holding head comprising an electrically insulating portion and an electrically conductive portion, the electrically conductive portion being configured to contact the stick electrode,
a handle connected to the electrode holding head at a first handle end and receive a welding cable at a second handle end, the handle comprising
a conductive inner handle receptacle configured to electrically connect with the electrically conductive portion of the electrode holding head and a cable conductor of the welding cable, and
an insulating outer handle cover encircling the inner hand receptacle.

15. The welding system of any one of claims 8 to 14, further comprising the tracking system, the tracking system having a tracking sensor configured to capture tracking sensor data and processing circuitry configured to analyze the tracking sensor data to identify a marker position and/or a marker orientation of the trackable marker, and determine a stick electrode position and/or a stick electrode orientation of the stick electrode based on the marker position and/or marker orientation.
